(19) **Europäisches Patentamt / European Patent Office / Office européen des brevets**

(11) **EP 2 977 400 A1**

(12) **EUROPEAN PATENT APPLICATION**

(43) Date of publication:
**27.01.2016 Bulletin 2016/04**

(51) Int Cl.:
***C08K 3/00*** *(2006.01)*

(21) Application number: **15177532.7**

(22) Date of filing: **20.07.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(30) Priority: **25.07.2014 IT MI20141359** | (71) Applicant: **Rossi, Roberto**<br>**20067 Paullo (MI) (IT)**<br><br>(72) Inventor: **Rossi, Roberto**<br>**20067 Paullo (MI) (IT)**<br><br>(74) Representative: **Simino, Massimo**<br>**Cuccia & Simino S.r.l.**<br>**Corso di Porta Romana, 23**<br>**20122 Milano (IT)** |

(54) **PRODUCT HAVING ANTIMICROBIAL AND/OR ANTIBACTERIAL CHARACTERISTICS DESIGNED FOR CONTACT WITH MILK FOR ADMINISTRATION TO INFANTS AND METHOD OF PRODUCING SUCH PRODUCT**

(57)     A container having antimicrobial and/or antibacterial characteristics and designed for milk for administration to infants preservation, wherein said container is at least partially formed from a base of a polymeric material comprising silver in the form of ions.

**Description**

The present invention relates to a product having antimicrobial and/or antibacterial characteristics designed for contact with milk for administration to infants.

In a further aspect, the present invention also relates to a method of producing said product.

As used herein, the term product generally relates to products such as a container, a glass, a baby bottle, a cap, a nipple, a breast pump cup and the like, and particularly objects designed for contacting and/or containing breast milk or any other element/food for administration to infants.

For simplicity, reference will be made hereinafter, by way of example and without limitation, to a container such as a baby bottle, as a possible product.

As used herein, the term "milk for administration to infants" generally relates to breast milk or an infant formula, specially prepared, for instance, by hydrating appropriate milk powder or granules, for administration to infants.

More particularly, the present invention relates to a product having antimicrobial characteristics containing sliver in the form of ions and adapted and/or designed for contact with milk for administration to infants, without altering its chemical, physical, nutritional and vital properties.

Most particularly, the present invention relates to a product formed at least partially from a base made of polymeric material having antimicrobial characteristics, wherein said product is able to maintain the properties of the milk for administration to infants contacted thereby unaltered, while ensuring that the product has proper sanitary conditions throughout its operating life.

Milk for administration to infants is known to be an essential and important food for infants before they are able to receive other food.

It contains all the essential components for proper growth in the first months of life such as: fats, such as 8-carbon fatty acids and polyunsaturated fats; proteins such as casein, $\alpha$-lactalbumin, lactoferrin, IgA, IgG, lysozyme, serum albumin, $\beta$-lactoglobulin; carbohydrates such as lactose and oligosaccharides; and minerals, such as calcium, phosphorus, sodium, potassium and chlorin.

Therefore, it is essential for milk for administration to infants to maintain all the above nutritional characteristics.

Breast feeding is the most common form of milk for administration to infants feeding, although milk may be extracted and indirectly administered to the infant.

Nevertheless, milk for administration to infants supply may drop or even stop in certain women. This drop may have countless causes, including poor intake of liquids (such as water, beer, broth), wrong diet, stress. In certain cases, an infant cannot suck milk from the breast due to improper latching, or because he/she is premature or suffers from serious diseases, such as those affecting the gastrointestinal tract and metabolic dysfunction.

In view of obviating the above mentioned drawbacks, breast milk banks have been established, which collect human milk donated by nursing mothers during their hospitalization after delivery and especially those who nurse their babies at home and have excess milk supply.

Milk from breast milk banks is typically extracted by manual breast compression or by suitable breast pumps, is collected in containers and stored in home refrigerators or freezers if it cannot be carried to the milk bank within twenty-four hours from collection.

Milk is usually collected by milk bank personnel at the donor's home, when the donor lives far from the bank or cannot reach the bank. The collected milk is carried from the donor's home to the bank in a thermal container.

Once milk has reached the collection center, it is placed in a freezer, and then it is thawed and mixed with other collected milk in a pool and divided into bottles for pasteurization. Immediately after pasteurization one of the bottles is sent to the central laboratory for bacteriological examinations and the other bottles are frozen and stored at -20°C until the result of bacteriological tests is available. If the culture result is negative, milk is kept frozen until use. The day before use, bottles are removed from the freezer and placed in a storing refrigerator, where they are allowed to thaw for baby feeding use the next day.

It will be understood from the above that the great number of steps that milk must undergo before use may lead to the risk of milk contamination caused by bacteria on the hands of the various users, such as *Staphylococcus aureus* and *Pseudomonas aeruginosa strains,* alighting on both the milk container and milk container cap. Once these bacterial colonies have adhered, they may proliferate and contact milk, thereby altering its nutritional properties.

Given the above, the germicide and bactericide effects of silver are known.

Nevertheless, silver may have highly noxious effects on human health. Silver compounds may be absorbed into the bloodstream and deposit in various tissues of the organism, leading to argyria. This disease initially appears as a permanent dusky-gray pigmentation of the skin caused by surface formation of Ag and $Ag_2S$. Chronic bronchitis, renal damage and arteriosclerosis may follow.

Also, oral ingestion may cause rapid intoxication, with vomiting, abdominal pain, gastroenteritis, collapse. $AgNO_3$ may even have a lethal effect in an adult individual, when ingested at a dose of about 10g. The silver ion also interacts with nucleic acids (DNA, RNA), by creating bonds, especially at the nitrogenous bases.

Due to the crucial importance of proper preservation of milk for administration to infants in milk banks, very strict standards have been issued concerning the material to be used for making milk containers.

The standard ASTM E 2180-70 may be mentioned as an example, which sets forth a special method for assessing the presence of antimicrobial and/or antibacterial activity in plastic materials, as percent microbial and/or bacterial count reduction. This standard is based on a method that compares specimens of plastic materials that have been treated with an antimicrobial agent and specimens of plastic materials in which such agent is absent.

Using this method, a polymeric material may be deemed to be suitable for use in milk containers when the percent bacterial and/or microbial count reduction is of the order of 90% in twenty-four hours.

EP 2113466 discloses a flexible tube made of a plastic material for packaging cosmetic and pharmaceutical products, nanometric silver being added to the plastic polymeric material as an additive.

According to EP 2113466, such additive contains 1.8% to 2.5% nanometric silver by weight and is added to the plastic material, during hot processing of the plastic material, to constitute 4.8% to 5.5% by weight thereof.

Nevertheless, it should be noted that the plastic material that forms the flexible tube as disclosed in EP 2113466 has certain drawbacks that make it unsuitable for use as a material for milk for administration to infants preservation.

A first discernible drawback is that the amount of silver in the flexible tube of EP2113466 does not provide effective reduction of the bacterial count.

A second far from negligible drawback is that the silver in the plastic material of EP 2113466 was found to tend to migrate into the liquid that is contacted by such material, and hence, in the case of an milk for administration to infants container, such silver would migrate into milk.

It shall be understood in this respect that, while the material of the milk for administration to infants container should have characteristics designed to reduce/limit bacterial count increase, it is still important to also check that milk will not be contaminated, for instance due to an excess of silver ions migrated into milk.

Patents WO 97/44387, JP 2002-000473 A and EP 0116865 A1 disclose plastic materials containing zeolite-entrapped silver ions.

Nevertheless, it shall be noted that zeolites are not suitable for use in making infant-food grade containers, such as containers for breast milk or infant formulas.

This is because, should zeolites contact milk for administration to infants, they would act as ion exchangers, and release the silver ions entrapped therein into the milk for administration to infants, while absorbing substances contained in the original milk. Furthermore, zeolites in contact with milk for administration to infants would tend to also absorb water contained therein, due to their sponge-like behavior.

It will be understood from the above that the presence of zeolites would lead to serious contamination of milk for administration to infants, and alter its composition.

It is no coincidence that in the above mentioned prior art literature, the plastic materials containing zeolites are designed to a use other than that envisaged in the present invention. Particularly: WO 97/44387 relates to zeolite-containing materials designed for packaging, wall papers and items of clothing, JP 2002-000473 A relates to a chopping board and EP 0116865 A1 relates to general molded articles.

Furthermore, it shall be noted that, as disclosed in EP 0116865, for the molded article to have the required bactericide effectiveness, the zeolite particles shall meet both the following conditions: the specific surface area shall be at least 150 $m^2$/g and the molar ratio of $SiO_2$ to $Al_2O_3$ will be at most 14.

It shall be understood from the above that the need is still strongly felt for a polymeric material having antimicrobial and/or antibacterial characteristics, to be used for making a product, particularly a disposable product such as a container designed for collecting milk for administration to infants in milk banks, that is able to maintain the chemical, physical, nutritional and vital properties of the milk for administration to infants contained therein, and at the same time ensure that the container has proper sanitary conditions throughout its operating life.

This invention is based on the problem of providing a product having antimicrobial and/or antibacterial characteristics and designed to contact milk for administration to infants that can fulfill the above need, while obviating the above prior art drawbacks.

In a further aspect, the invention is based on the problem of providing a method of producing the above mentioned product having antimicrobial and/or antibacterial characteristics and designed to contact milk for administration to infants, while obviating the above prior art drawbacks.

According to the invention, the above problems are solved by:

- a product having antimicrobial and/or antibacterial characteristics and designed for contact with milk for administration to infants as defined in claim 1, and
- a method of producing said product having antimicrobial and/or antibacterial characteristics and designed for contact with milk for administration to infants as defined in claim 9.

The proprietor surprisingly found that the above mentioned prior art drawbacks can be obviated when said product having antimicrobial and/or antibacterial characteristics and designed for contact with milk for administration to infants is at least partially made from a base of polymeric material which comprises an antimicrobial agent comprising silver in the form of ions ranging from 1 to 10 micron, and wherein the silver in the form of ions is present in the container in an amount of at least 1.1% (w/w) based on the weight of the polymeric material.

Therefore, the present invention first relates to a product having antimicrobial and/or antibacterial characteristics and designed for contact with milk for administration to infants characterized in that said product is at least partially made from a base of polymeric material which comprises silver in the form of ions, wherein said silver has dimensions ranging from 1 to 10 micron, and is present in said polymeric material having antimicrobial characteristics in an amount of at least 1.1% (w/w) based on the weight of said polymeric material having antimicrobial and/or antibacterial characteristics, said product being selected from the group comprising a container for preserving milk in milk banks, a glass, a baby bottle, a cap, a nipple and a breast pump cup.

According to a preferred embodiment, this silver in the form of ions has dimensions ranging from 1.2 to 6.0 micron, more preferably this silver in the form of ions has a dimension of the order of 1.5 micron.

According to a preferred embodiment, this silver in the form of ions is present in an amount ranging from 1.2% to 1.8% (w/w) based on the weight of said polymeric material having antimicrobial and/or antibacterial characteristics, more preferably this silver in the form of ions is present in an amount of 1.5% (w/w) based on the weight of said polymeric material having antimicrobial and/or antibacterial characteristics.

According to a preferred embodiment, said base of polymeric material is selected from the group comprising silicone, polyethylene, polypropylene, polyethylene terephthalate, polyvinyl chloride, polycarbonate, thermoplastic rubber and mixtures thereof.

According to a preferred embodiment, such product comprises a multi-layer structure, with the outermost layer at least partially, preferably entirely made from said polymeric material.

Advantageously, opposite outer layers of said multi-layer structure are at least partially, preferably entirely made from said polymeric material.

According to a preferred embodiment, the above mentioned product of the invention may be composed of said multi-layer structure, e.g. multiple layers of equal or different materials, which are joined together, for instance, by lamination, overmolding or gluing. Here, it may be advantageously sufficient to only make an outermost layer of the multi-layer structure, at least partially from the above mentioned material of the invention comprising silver in the ion state.

A reduced amount of silver in the ion state may thus be used in the manufacture of this product, i.e for the surface layer only, supposedly the layer designed for contact with milk for administration to infants.

Alternatively, the opposite outer layers of a multi-layer structure may be arranged to comprise, at least partially, the above mentioned material comprising silver in the ion state.

Possibly, a non-multi-layer material may be envisaged, which is enriched with silver in the ion state only at one or both of its outer surfaces.

According to a preferred embodiment, said product of the invention is a container for preserving milk in milk banks.

According to a preferred embodiment, said product of the invention is a single-use, i.e. disposable product.

Advantageously, said product may be obtained by manufacturing techniques such as injection molding, blow molding, injecion-blow molding, molding and the like.

It shall be noted that, as used herein, the term *"hot processing step"* is intended to designate processing, melting, softening or simply heating steps performed on the polymeric material to make it suitable for further processing, such as injection molding, blow molding, injection-blow molding, molding and the like. During this hot processing step the polymeric material in an initial granular/solid state is softened to a more viscous state, without necessarily reaching a liquid state, it being understood in this respect that no melting point may be defined for certain polymeric materials, and a transition temperature may be at most defined therefor.

In certain cases, e.g. when relating to silicone, the polymeric material may be initially in a pasty or liquid state instead of a granular form, whereby the later hot processing step simply consists in heating the starting material for further processing such as molding, etc. and finally consolidating it in the desired form, e.g. by a curing step.

Therefore, the present invention further relates to a method of producing the product of the present invention, characterized in that it comprises a step of hot processing a polymeric material which has been added with silver in the form of ions having dimensions ranging from 1 to 10 micron, said silver in the form of ions being present in said polymeric material having antimicrobial characteristics in an amount of at least 1.1% (w/w) based on the weight of said polymeric material having antimicrobial characteristics.

According to a preferred embodiment, this silver in the form of ions has dimensions ranging from 1.2 to 6.0 micron, more preferably this silver in the form of ions has a dimension of the order of 1.5 micron.

According to a preferred embodiment, this silver in the form of ions is present in an amount ranging from 1.2% to 1.8% (w/w) based on the weight of said polymeric material having antimicrobial characteristics, more preferably this silver in the form of ions is present in an amount of 1.5% (w/w) based on the weight of said polymeric material having antimicrobial characteristics.

According to a preferred embodiment, said polymeric material designed to undergo said hot processing step is selected from the group comprising silicone, polyethylene, polypropylene, polyethylene terephthalate, polyvinyl chloride, polycarbonate, thermoplastic rubber and mixtures thereof.

According to a preferred embodiment, in the method of the present invention:

- the silver in the form of ions is pre-mixed with a polymer selected from the group comprising silicone, polyethylene, polypropylene, polyethylene terephthalate, polyvinyl chloride, polycarbonate, thermoplastic rubber and/or mixtures thereof to form an antimicrobial and/or antibacterial agent and
- prior to said step of hot processing said polymeric material said antimicrobial and/or antibacterial agent is mixed with said polymeric material.

It shall be noted that the polymeric material to be sent to the later hot processing step, e.g. an extrusion step, is generally in a granular state, although such polymeric material may also be in a pasty or semi-liquid state, such as when using silicone as the polymeric material.

Referring to the above mentioned percentages, the following may be provided:

- said polymer is mixed with 10% of said antimicrobial and/or antibacterial agent
- said antimicrobial and/or antibacterial agent comprises at least 11% silver in the form of ions, preferably 12% to 18% (w/w) silver in the form of ions, and more preferably about 15% (w/w) silver in the form of ions.

Therefore, the above mentioned antimicrobial and/or antibacterial agent has a much higher amount of silver in the form of ions than the amount of silver in the form of ions that is designed to be present in the material produced by the method of the invention, because said antimicrobial agent is added in a limited amount relative to the amount of polymeric material with which the antimicrobial agent will be mixed.

The preparation of the above mentioned antimicrobial agent may provide advantages in that, during preparation of the materials to be sent to hot processing, the user of such method will not have to handle a powder, but two distinct polymeric materials (in granular, pasty or liquid form), one polymeric material having been previously enriched with a large amount of silver in the ion state. As a result, handling and preparation by the user is simplified as compared with the difficulty of handling powders.

According to a preferred embodiment of the method of the invention, said hot processing step is followed by a step of conforming the product of the invention, in which said polymeric material undergoes processing selected from the group comprising injection molding, blow molding an injection-blow molding.

Advantageously, said silver in the form of ions added to said polymer in the method of the present invention is in the form of a powder.

The above product having antimicrobial and/or antibacterial characteristics was found to be particularly suitable for contact with milk for administration to infants, e.g. during or after preservation thereof in milk banks.

The advantages of the above described product and method of the present invention are self-evident from the above.

A first advantage may be found in that the product of the invention is at least partially made of a base of polymeric material comprising silver in the form of ions, which affords at least about 90% reduction of the bacterial and/or microbial count in twenty-four hours, based on tests conducted according to the standard ASTM E 2180-07, such antibacterial count reduction effect being advantageously only ensured proximate to the outer wall of the material. Thus, such bacterial count reduction is obtained without any migration of silver ions into the milk or any other substance contacted by the polymeric material having antibacterial characteristics, as assessed by tests.

A second advantage may be found in that the product of the present invention may maintain proper sanitary conditions throughout its operating life.

A third advantage may be found in that the product of the present invention is able to maintain the properties of milk for administration to infants, or other food contacted thereby, unaltered, as the silver ions in the polymeric material do not migrate into the milk.

A fourth advantage may be found in that the product of the present invention is able to maintain its own characteristics unaltered at the various temperatures it would encounter during normal use, e.g. the temperature of collected milk (about 37°C), the milk collection temperature for the donating mother (ambient temperature, about 25°C), the storage temperature in the home refrigerator of the donating mother before transportation to the milk bank (about 4°C) and the storage temperature in the freezer of the milk bank (about -20°C).

A fifth advantage may be found in that the antimicrobial and/or antibacterial characteristics required for milk collection may be obtained even when the polymeric material comprising the antimicrobial agent of the present invention only constitutes the outermost layer of a multi-layer product.

A sixth advantage may be found in that the product of the invention is at least partially made of a base of polymeric material comprising silver in the form of ions, in a minimum specific amount and with dimensions adapted to obtain an optimal percent bacterial count reduction, while avoiding the undesired migration of silver in the form of ions or excessive increase of manufacturing costs due to an excessive amount of silver in the form of ions being used.

The following examples are given to illustrate the present invention without limiting it in any manner, it being understood that tests have been conducted with reference to a container for milk for administration to infants collection as a possible embodiment of a product made of a polymeric material having antibacterial characteristics according to the invention.

## ANTIMICROBIAL EFFICIENCY TESTS

The antimicrobial activity of the container of the present invention has been tested with the ASTM 2180 method (Standard test method for determining the activity of incorporated antimicrobial agent(s) in polymeric or hydrophobic materials).

### Microorganisms

### Strain identification and preservation

*Pseudomonas aeruginosa* ATCC15442 and *Staphylococcus aureus* ATCC6538 strains were used. The bacterial strain is maintained in the frozen state; before use it is transplanted on TSA cultures in 4 steps at most; after growth it is stored in a refrigerator at 5°C $\pm$ 3°C.

### Preparation of the test suspension

Each bacterial strain was grown in tryptic soy agar at 37 $\pm$ 1 °C for 18-24 hours; each culture was diluted with tryptone water to obtain a test suspension with a concentration ranging from $1x10^8$ to $5x10^8$ cfu/mL.

The number of cfu/mL of each microbial suspension was counted by serial decimal dilutions in tryptone water and by seeding of 1 mL dilution per plate, in duplicate, from $10^{-6}$ to $10^{-8}$.

Within 2 hours from the start of the test, 1 mL of the relevant test suspension was separately added to 100 mL semi-liquid agar (balanced at 45°C $\pm$ 2°C) to obtain a final concentration of $1-5x10^6$ cfu/mL.

### Media and reagents

The media and reagents were checked for validity before starting analysis.

Tryptone water

| NaCl | 8.5g |
| Tryptone | 1g |
| Water to | 1000 mL |

- Tryptone soy agar (TSA)
- CEN neutralizer
- Semi-liquid agar

| Agar | 3g |
| NaCl | 8.5g |
| Water | to 1000 mL |

### Instruments

Instruments and equipment were tested for validity before starting Thermostat analysis @ 37° $\pm$ 1°C with ordinary microbiological lab equipment.

Test project

For each strain, the test was conducted on 6 samples of the processed material (test product) and on 6 samples of unprocessed material (negative control).

Each test sample was placed into a separate sterile container and the exposed outer surface of the test material was inoculated with 1 mL of the test suspensions in semi-liquid agar. Then the test inoculum was gently pressed with a ring to obtain a film not deeper than 1 mm.

Immediately after inculation (TO), 3 samples of unprocessed material and 3 samples of processed material were processed by addition of 10 ml neutralizer and vortexed for 2 minutes to dislodge the microorganisms.

Viable microbial counting was conducted by inclusion in an agar medium (TSA) by seeding twice 1 mL of the previously prepared solution and twice 1 mL of 10-times serial dilutions in the neutralizer.

The plates were incubated at 37°C $\pm$ 1°C for 48 hours.

The remaining inoculated plates were incubated at 37°C $\pm$ 1°C for twenty-four hours.

At the end of the contact time, the samples were processed with the same procedure as the T0 samples.

After incubation, Petri dish colonies were counted and the final results were expressed as the antimicrobial activity of the test substance as compared with the negative control at the contact time.

Test validity criteria

The test was deemed to be valid when the following conditions were met:

- the average number of viable microorganisms recovered immediately after inoculation from unprocessed test samples (negative control) must fall within the range $1,0-5,0 \times 10^6$ cfu/sample.
- The number of viable microorganisms recovered from each unprocessed test sample (negative control) after the contact time must be smaller than $1,0 \times 10^5$ cfu/sample.
- The number of viable microorganisms recovered from the processed samples placed on a solidified media after the contact time must be smaller than 10 cfu/sample.

Calculation and expression of results

The results were expressed as antimicrobial activity using the following equations:

- By logarithmic expression (Log):

$$\text{geometric mean} = (\text{LogR1} + \text{LogR2} + \text{LogR3})/3$$

where
R: number of microorganisms recovered from the unprocessed sample or processed sample incubation time
- By % expression

$$R(\%) = \frac{(N_u - N_a)}{N_u} \times 100$$

$N_u$: the antilogarithm (antilog) of the geometric mean of the organisms recovered from T24 (unprocessed samples)
$N_a$: the antilogarithm (antilog) of the geometric mean of the organisms recovered from T24 (processed samples)

The following results are obtained with a container of the invention containing 1.5% (w/w) silver in the form of ions and in which the antimicrobial agent was 10% (w/w) of the polymeric material of the container.

**Test strain counting in semi-liquid agar**

| Test strain | Result cfu/mL | Agar (mL) from sample | Inoculum (cfu/sample) | |
|---|---|---|---|---|
| *Staphylococcus aureus* ATCC6538 | 3.2E+06 | 1.0 | 3.2E+06 | Compliant |

(continued)

| Test strain | Result cfu/mL | Agar (mL) from sample | Inoculum (cfu/sample) | |
|---|---|---|---|---|
| *Pseudomonas aeruginosa* ATCC9027 | 4.3E+06 | 1.0 | 4.3E+06 | Compliant |

**Microorganisms recovered from specimen**

| Test strain | Samples | Contact times | | | | | | Average |
|---|---|---|---|---|---|---|---|---|
| | | T0 | | | T24 hours | | | |
| | | cfu/sample | | | cfu/sample | | | T0 |
| *Staphyloco ccus aureus ATCC6538* | Unprocessed | 4.1E+06 | 3.7E+05 | 4.5E+05 | 1.7E+06 | 1.3E+06 | 1.9E+06 | 1.6E+06 |
| | Processed | 3.1E+06 | 4.3E+06 | 3.8E+06 | 1.8E+05 | 1.7E+05 | 1.3E+05 | |
| *Pseudomona s aeruginosa* ATCC9027 | Unprocessed | 2.5E+06 | 2.8E+06 | 2.1E+06 | 2.1E+07 | 2.4E+07 | 1.7E+07 | 2.5E+06 |
| | Processed | 2.1E+06 | 3.4E+06 | 3.2E+06 | 1.3E+06 | 1.2E+06 | 1.4E+06 | |

**Logarithm of the number of microorganisms recovered from sample**

| Test strain | Samples | Contact times | | |
|---|---|---|---|---|
| | | T24 hours | | |
| | | cfu/sample | | |
| *Staphylococcu s aureus ATCC6538* | Unprocessed | 6.23 | 6.11 | 6.28 |
| | Processed | 5.26 | 5.23 | 5.11 |
| *Pseudomonas aeruginosa* ATCC9027 | Unprocessed | 7.32 | 7.38 | 7.23 |
| | Processed | 6.11 | 6.08 | 6.15 |

**Geometric mean and antilog of the geometric mean of the microorganisms recovered from specimen**

| Test strain | Samples | Contact times | |
|---|---|---|---|
| | | T24 hours | |
| | | cfu/sample | |
| *Staphylococcus aureus ATCC6538* | Unprocessed | 6.21 | 1.6E+06 |
| | Processed | 5.20 | 1.6E+05 |
| *Pseudomonas aeruginosa* ATCC9027 | Unprocessed | 7.31 | 2.0E+07 |
| | Processed | 6.11 | 1.3E+06 |

**Percent reduction and log reduction**

| Test strain | Reduction (%) |
|---|---|
| *Staphylococcus aureus ATCC6538* | 90.000 |
| *Pseudomonas aeruginosa* ATCC9027 | 93.500 |

The following results are obtained with a container containing 0.75% (w/w) silver in the form of ions and in which the antimicrobial agent was 5% (w/w) of the polymeric material of the container.

**Test strain counting in semi-liquid agar**

| Test strain | Result | Agar (mL) | Inoculum | |
|---|---|---|---|---|
| | cfu/mL | from sample | (cfu/sample) | |
| *Staphylococcus aureus* ATCC6538 | 3.2E+06 | 1.0 | 3.2E+06 | Compliant |
| *Pseudomonas aeruginosa* ATCC9027 | 4.3E+06 | 1.0 | 4.3E+06 | Compliant |

**Microorganisms recovered from specimen**

| Test strain | Samples | Contact times | | | | | | Average T0 |
|---|---|---|---|---|---|---|---|---|
| | | T0 | | | T24 hours | | | |
| | | cfu/sample | | | cfu/sample | | | |
| *Staphyloc occus aureus ATCC6538* | Unprocessed | 4.1E+06 | 3.7E+06 | 4.5E+06 | 2.7E+06 | 2.3E+06 | 2.9E+06 | 4.1E+06 |
| | Processed | 3.2E+06 | 4.5E+06 | 3.9E+06 | 2.1E+06 | 1.3E+06 | 1.6E+06 | 3.9E+06 |
| *Pseudomon as aeruginos a ATCC9027* | Unprocessed | 2.5E+06 | 2.8E+06 | 2.1E+06 | 2.1E+06 | 2.4E+06 | 1.7E+06 | 2.5E+06 |
| | Processed | 3.8E+06 | 3.3E+06 | 6.2E+06 | 1.5E+06 | 1.7E+06 | 1.9E+06 | 4.4E+06 |

**Logarithm of the number of microorganisms recovered from sample**

| Test strain | Samples | Contact times | | |
|---|---|---|---|---|
| | | T24 hours | | |
| | | cfu/sample | | |
| *Staphylococcu s aureus ATCC6538* | Unprocessed | 6.43 | 6.36 | 6.46 |
| | Processed | 6.32 | 6.11 | 6.20 |
| *Pseudomonas aeruginosa* ATCC9027 | Unprocessed | 6.32 | 6.38 | 6.23 |
| | Processed | 6.18 | 6.23 | 6.28 |

**Geometric mean and antilog of the geometric mean of the microorganisms recovered from specimen**

| Test strain | Samples | Contact times | |
|---|---|---|---|
| | | T24 hours | |
| | | cfu/sample | |
| *Staphylococcus aureus ATCC6538* | Unprocessed | 6.42 | 2.6E+06 |
| | Processed | 6.21 | 1.6E+06 |
| *Pseudomonas aeruginosa* ATCC9027 | Unprocessed | 6.31 | 2.0E+06 |
| | Processed | 6.23 | 1.7E+06 |

**Percent reduction and log reduction**

| Test strain | Reduction (%) |
|---|---|
| *Staphylococcus aureus* | 38.462 |
| *ATCC6538* | |
| *Pseudomonas aeruginosa* ATCC9027 | 15.000 |

The above results show that only the container of the present invention provides an antimicrobial efficiency at least of the order of 90% within 24 hours upon use of a small required amount of silver in the form of ions to achieve the result.

## SILVER ION MIGRATION TEST

In order to assess whether the silver in the form of ions might migrate from the container to the substance contained therein (e.g. breast milk) during use, an extraction test was conducted on the container of the invention using a 50:50 water-ethanol mixture at 40°C for twenty-four hours.

An ICP-OES (plasma atomic emission spectroscopy) method was assessed as a limit test on a water-ethanol solution to test the extracted solution for the content of silver in the form of ions.

**Experimental Procedure**

Devices

- ICP-OES Perkin Elmer Optima 2100DV (Code B0453)
- Memmert oven (Code B1204)
- Standard lab device

Reagents

- Water (produced on site by MilliQ-Biocel A10, sampled for use)
- 65% nitric acid (Fluka, batch BCBM8406V)
- Ethanol (Fluka, batch SZBD347AV)

Preparation of the extaction solution

The sample was completely soaked in 300 mL of a 50:50 ethanol-water solution.

Preparation of ICP-OES solutions

1% nitric acid was used

Standard stock solution (10 µg/ml)

0.5 mL of each of the 1000 µg/ml standard solutions were transferred into a 50 mL-volume flask, and the solution was brought up to volume with 4% nitric acid.

Standard solution 1 (0.2 µg/ml)

1 mL of the 10 µg/ml standard stock solution was added with 50 mL ethanol and diluted to 50 mL with 4% nitric acid.

Standard solution 2 (0.5 μg/ml)

2.5 mL of the 10 μg/ml standard stock solution was added with 50 mL ethanol and diluted to 50 mL with 4% nitric acid.

Standard solution 3 (1.0 μg/ml)

5.0 mL of the 10 μg/ml standard stock solution was added with 50 mL ethanol and diluted to 50 mL with 1% nitric acid.

LOD verification standard solution (0.1 μg/ml)

0.5 mL of the 10 μg/ml standard stock solution was added with 50 mL ethanol and diluted to 50 mL with 4% nitric acid.

Preparation of the extraction blank

50 ml of the prepared extraction solution were added witn 2 mL nitric acid.

Preparation of the sample (duplicate preparation)

50 ml of the extracted saample were added witn 2 mL nitric acid.

**Instrument conditions**

| Spectrometer | |
|---|---|
| Purge gas flow | Normal |
| Read time | Automatic by analyte detection |
| Read delay time | 45 sec |
| Replicates | 3 |
| **Wavelengths (nm)** | |
| Al | 328.072 |
| **Plasma parameters** | |
| Nebulizer | Meinhard nebulizer type A |
| Spray-chamber | Cyclonic spray chamber of the collector |
| Source delay | 30 sec |
| Plasma aerosol type | Wet |
| Nebulizer start-up | Instant |
| Plasma flow | 15 L/min |
| Auxiliary flow | 1.0 L/min |
| Nebulizer flow | 0.60 L/min |
| RF power | 1500 W |
| Viewing distance | 15.0 |
| Plasma viewing mode | Axial |
| **Peristaltic pump and washing parameters** | |
| Sample flow rate | 1.0 mL/min |
| Sample flow time | 0 sec |
| Wash frequency | Between samples |

(continued)

| Peristaltic pump and washing parameters | |
| --- | --- |
| Wash position | 0 |
| Wash rate | 1.0 mL/min |
| Wash time | 15 sec |
| **Processing** | |
| Peak algorithms | Areas of all the elements |
| Spectral overlap | None |
| Calibration | Linear, calculated intercept |

Results

The following LOD was verified

| Element | LOD on the extraction solution |
| --- | --- |
| Ag | 0.1 |

Ethanol-water extraction solution

| Element | ($\mu$g/ml) |
| --- | --- |
| Ag | < LOD |

A LOD of 0.10 $\mu$g/ml Ag was tested for the method and no migration of silver ions was detected on extracted samples of the container of the invention containing 1.5% (w/w) silver in the form of ions and in which the antimicrobial agent was 10% (w/w) of the polymeric material of the container.

It shall be noted that, as already mentioned in the introduction to the description, the material that forms the product of the invention contains no zeolite, to prevent pollution, contamination or alteration of the milk for administration to infants to be contacted by such material. Thus, the silver ions contained in the material are not entrapped in zeolites, whereby any later migration, i.e. any later important contaminating release of silver in the form of ions into the milk for administration to infants is prevented.

Those skilled in the art will obviously appreciate that a number of changes and variants may be made to the method, material, product and use as described hereinbefore, without departure from the scope of the invention, as defined in the following claims.

Thus, for example, while the description and especially its introduction have been made with specific reference to breast milk, the same considerations concerning the antimicrobial and/or antibacterial power provided by the presence of silver in the ion state in the material, according to the above mentioned amounts and dimensions also apply to products other than breast milk, such as infant formula or other food, beverages or substances, in either liquid or solid phase, that may contact said material.

**Claims**

1. **A product designed for contact with milk for administration to infants, having antimicrobial and/or antibacterial characteristics, characterized in that** said product is at least partially made from a base of polymeric material which comprises silver in the form of ions, wherein said silver has dimensions ranging from 1 to 10 micron, and is present in said polymeric material having antimicrobial characteristics in an amount of at least 1.1% (w/w) based on the weight of said polymeric material having antimicrobial and/or antibacterial characteristics, said product being selected from the group comprising a container for preserving milk in milk banks, a glass, a baby bottle, a cap, a nipple and a breast pump cup.

2. A product as claimed in claim 1, wherein said silver in the form of ions has dimensions ranging from 1.2 to 6.0 micron, more preferably said silver in the form of ions has a dimension of the order of 1.5 micron.

3. A product as claimed in claim 1 or 2, wherein said silver in the form of ions is present in an amount ranging from 1.2% to 1.8% (w/w) based on the weight of said polymeric material having antimicrobial and/or antibacterial characteristics, more preferably said silver in the form of ions is present in an amount of 1.5% (w/w) based on the weight of said polymeric material having antimicrobial and/or antibacterial characteristics.

4. A product as claimed in any of claims 1 to 3, wherein said base of polymeric material is selected from the group comprising silicone, polyethylene, polypropylene, polyethylene terephthalate, polyvinyl chloride, polycarbonate, thermoplastic rubber and mixtures thereof.

5. A product as claimed in claim 1, comprising a multi-layer structure wherein at least an outermost layer o both outermost layers are made of a material as claimed in any of claims 1 to 4.

6. A product as claimed in any of claims 1 to 5, wherein said silver in the form of ions is not contained in zeolite.

7. A product as claimed in claim 6, wherein said product is a container for preserving milk in milk banks.

8. A product as claimed in any of claims 1 to 7, wherein said product is a single-use, disposable product.

9. **A method of producing a product as described in any of claims 1 to 8, characterized in that** it comprises a step of hot processing a polymeric material which has been added with silver in the form of ions having dimensions ranging from 1 to 10 micron, said silver in the form of ions being present in said polymeric material having antimicrobial characteristics in an amount of at least 1.1% (w/w) based on the weight of said polymeric material having antimicrobial characteristics.

10. A method as claimed in claim 9, wherein said silver in the form of ions has dimensions ranging from 1.2 to 6.0 micron, more preferably said silver in the form of ions has a dimension of the order of 1.5 micron.

11. A method as claimed in claim 9 or 10, wherein said silver in the form of ions is present in an amount ranging from 1.2% to 1.8% (w/w) based on the weight of said polymeric material having antimicrobial characteristics, more preferably said silver in the form of ions is present in an amount of 1.5% (w/w) based on the weight of said polymeric material having antimicrobial characteristics.

12. A method as claimed in any of claims 9 to 11, wherein said polymeric material designed to undergo said hot processing step is selected from the group comprising silicone, polyethylene, polypropylene, polyethylene terephthalate, polyvinyl chloride, polycarbonate, thermoplastic rubber and mixtures thereof.

13. A method as claimed in any of claims 9 to 12, wherein:

   - said silver in the form of ions is pre-mixed with a polymer selected from the group comprising silicone, polyethylene, polypropylene, polyethylene terephthalate, polyvinyl chloride, polycarbonate, thermoplastic rubber and/or mixtures thereof to form an antimicrobial and/or antibacterial agent and
   - prior to said step of hot processing said polymeric material said antimicrobial and/or antibacterial agent is mixed with said polymeric material.

14. A method as claimed in claim 13, wherein:

   - said polymer is mixed with 10% of said antimicrobial and/or antibacterial agent
   - said antimicrobial and/or antibacterial agent comprises at least 11% silver in the form of ions, preferably from 12% to 18% (w/w) silver in the form of ions, and more preferably about 15% (w/w) silver in the form of ions.

15. A method as claimed in any of claims 9 to 14, wherein said hot processing step is followed by a step of conforming the product as claimed in any of claims 1 to 8, wherein said polymeric material undergoes processing selected from the group comprising injection molding, blow molding an injection-blow molding.

16. A method as claimed in any of claims 9 to 15, wherein said silver in the form of ions added to said polymer is in the form of a powder.

Europäisches
Patentamt

European
Patent Office

Office européen
des brevets

# EUROPEAN SEARCH REPORT

**Application Number**

EP 15 17 7532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/44387 A1 (ATOCHEM ELF SA [FR]; KURATSUJI TAKATOSHI [JP]; MAILLET JEROME [JP]; MI) 27 November 1997 (1997-11-27) * examples 5,6 * * claim 1 * | 9-11,16 | INV. C08K3/00 |
| X | DATABASE WPI Week 200227 Thomson Scientific, London, GB; AN 2002-211604 XP002737313, & JP 2002 000473 A (CHUEI BUSSAN KK) 8 January 2002 (2002-01-08) | 9,12,13, 16 | |
| Y | * abstract * | 5 | |
| X | EP 0 116 865 A1 (KANEBO LTD [JP]; KANTO KAGAKU [JP]) 29 August 1984 (1984-08-29) * page 8, paragraph 1 - page 9, paragraph 1 * * example 1 * * claims 1,5,6 * | 1,2,4, 7-10, 12-14,16 | |
| | | | TECHNICAL FIELDS SEARCHED (IPC) |
| X | WO 02/069698 A1 (DELAVAL HOLDING AB [SE]; AELVEBY NILS [SE]; BELLANDER MARTIN [SE]) 12 September 2002 (2002-09-12) | 1-4, 6-13,15, 16 | C08K |
| Y | * the whole document * | 5 | |
| A | WO 00/51477 A1 (HEALTHSHIELD TECHNOLOGIES L L [US]) 8 September 2000 (2000-09-08) * page 9, line 13 - page 10, line 4 * | 1-16 | |

The present search report has been drawn up for all claims

| Place of search | Date of completion of the search | Examiner |
|---|---|---|
| Munich | 9 November 2015 | Kaul-Buchberger, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 15 17 7532

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2015

| Patent document cited in search report | | Publication date | Patent family member(s) | | Publication date |
|---|---|---|---|---|---|
| WO 9744387 | A1 | 27-11-1997 | AU | 3028397 A | 09-12-1997 |
| | | | CA | 2223880 A1 | 27-11-1997 |
| | | | CN | 1198174 A | 04-11-1998 |
| | | | EP | 0839163 A1 | 06-05-1998 |
| | | | IL | 122916 A | 08-08-2001 |
| | | | JP | H09302212 A | 25-11-1997 |
| | | | NZ | 329644 A | 29-03-1999 |
| | | | US | 6120790 A | 19-09-2000 |
| | | | WO | 9744387 A1 | 27-11-1997 |
| JP 2002000473 | A | 08-01-2002 | NONE | | |
| EP 0116865 | A1 | 29-08-1984 | AU | 549375 B2 | 23-01-1986 |
| | | | CA | 1253992 A | 09-05-1989 |
| | | | DE | 3461240 D1 | 02-01-1987 |
| | | | EP | 0116865 A1 | 29-08-1984 |
| | | | JP | S6354013 B2 | 26-10-1988 |
| | | | JP | S59133235 A | 31-07-1984 |
| | | | US | 4775585 A | 04-10-1988 |
| | | | US | 4911898 A | 27-03-1990 |
| | | | US | 4911899 A | 27-03-1990 |
| WO 02069698 | A1 | 12-09-2002 | NONE | | |
| WO 0051477 | A1 | 08-09-2000 | AU | 3716800 A | 21-09-2000 |
| | | | WO | 0051477 A1 | 08-09-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2113466 A
- WO 9744387 A
- JP 2002000473 A
- EP 0116865 A1
- EP 0116865 A